# EUROPEAN PATENT APPLICATION

(11) **EP 4 520 963 A1**
(43) Date of publication of application: **12.03.2025**
(21) Application number: 23195700.2
(22) Date of filing: 06.09.2023
(51) Int. Cl.: F03G 3/00

(54) **GRAVITY ENERGY STORAGE SYSTEM, STORAGE SYSTEM, AND MOVABLE PLATFORM SYSTEM**

(71) Applicant: Nordic Gravity Energy Storage Technology Oy, 02240 Espoo (FI)
(72) Inventor: Kattelus, Juuso, 02240 Espoo (FI)
(74) Representative: Kolster Oy Ab

(57) **Abstract**

A movable platform system for transporting mass modules, said system comprises: a movable platform (20) having a top surface (29) and a bottom surface (30) opposite the top surface, a reeler (37) with a windable and rewindable cord (39), a connector (42) attached to an end of the cord, the connector is releasably attachable to the movable platform and arranged to move the movable platform via the reeler, the bottom surface of the movable platform comprises a plurality of gas holes (27), said gas holes arranged to deliver pressured gas for lifting the movable platform.

## Description

### FIELD OF THE INVENTION

The present invention relates to a gravity energy storage, and more particularly to a storage system and a movable platform system.

### BACKGROUND

Traditional gravity energy storage systems rely on ascent and descent of water to store and release gravitational potential energy, which comes with high costs and land requirements for construction and operation. The existing technologies face challenges in terms of storage speed, energy consumption and flexibility.

### BRIEF DESCRIPTION

An object of the present invention is to provide a solution to alleviate the above-mentioned problems. The idea is based on a movable platform system for transporting solid mass, and a storage system comprising such movable platform system, and a gravity energy storage system comprising the storage system.

### BRIEF DESCRIPTION OF THE DRAWINGS

In the following the invention will be described in greater detail by means of preferred embodiments with reference to the accompanying drawings, in which
Figure 1 illustrates a gravity energy storage system according to an embodiment;
Figure 2 illustrates a storage system according to an embodiment;
Figure 3 illustrates a mass module according to an embodiment;
Figure 4 illustrates multiple mass modules stacked and next to each other;
Figure 5 illustrates a storage system with one conveyer system according to an embodiment;
Figure 6 illustrates a closer view of the conveyer system according to an embodiment;
Figure 7 illustrates a partial side view of the conveyer system with a mass module;
Figure 8 illustrates a movable platform system according to an embodiment;
Figure 9 illustrates another closer view of the conveyer system with mass modules;
Figure 10 illustrates another partial side view of the conveyer system with mass modules;
Figure 11 illustrates a side view of the movable platform system with the mass module;
Figure 12 illustrates another side perpendicular to Figure 11.

### DETAILED DESCRIPTION

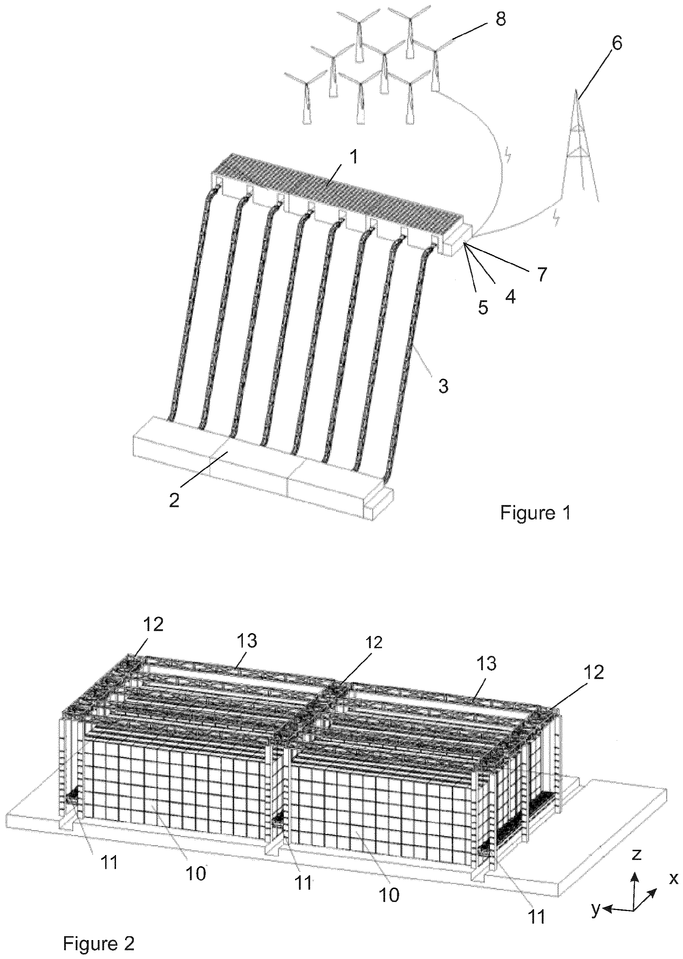

Figure 1 illustrates a gravity energy storage system according to an embodiment. The gravity energy storage comprises an upper storage site 1 at an upper elevation, a lower storage site 2 at a lower elevation, and a cable system 3 for transporting mass modules from the lower storage site 2 to the upper storage site 1 and vice versa.

The gravity energy storage system may further comprise a control unit 4 for controlling operations of all the systems, a power transmission system 5 connected to a power grid 6, and a gas compression system and storage 7 for pneumatic operations.

All configurations regarding the system may be configured in the control unit 4. The control unit 4 may control routing of energy into the power grid 6, and a control system of the energy storage system including operations of the conveyer system 11 and movable platform system 9, which will be explained in more detail later. The power grid 6 can be interconnected networks for delivering electricity from the gravity energy storage system to the consumers, or from the electricity producers to the gravity energy system.

The gravity energy storage system may further comprise renewable energy harvesters 8, such as wind turbines or solar panels, which can produce cheap electricity which can be used to lift the mass modules from the lower storage site 2 to the upper storage site 1.

Figure 2 illustrates a storage system according to an embodiment. The storage system may be identical in both the upper storage site 1 and the lower storage site 2. The storage system may comprise multiple stacked mass modules 10 side by side, at least one conveyer system 11 arranged to horizontally move the mass modules 10 in x-direction, and a frame 12 for supporting the conveyer system 11. The storage system may further comprise beams 13 for interconnecting the frames 12 for providing better rigidity and stability to the storage system.

The storage system can be built on a concrete or stone floor. Based on the available storage space, the storage system can be easily adjusted and tailored to the efficient utilization.

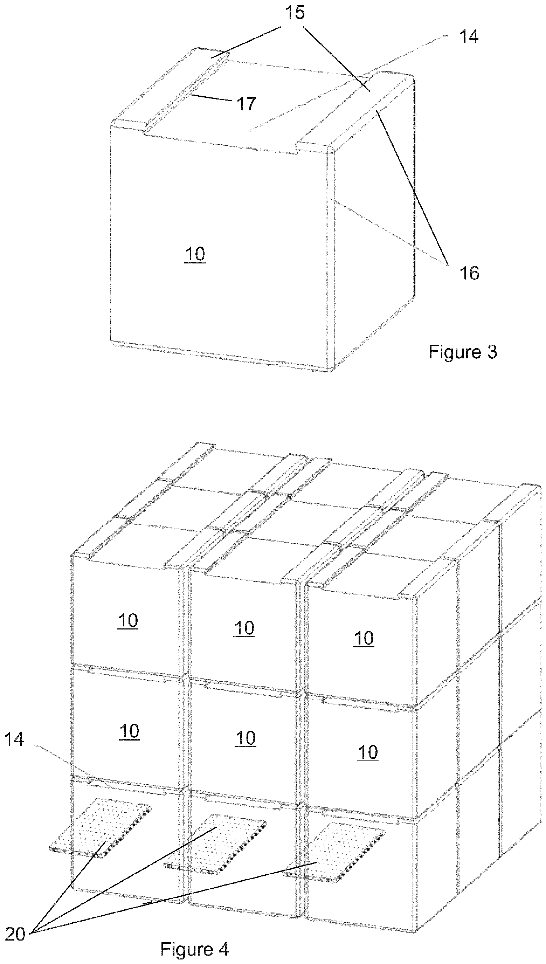

Figure 3 illustrates a mass module 10 according to an embodiment. The term "mass module" may refer to any moveable mass structure that can be transported from one location to another location having a different potential energy. The mass module 10 may be shaped as a cube or cuboid with six faces. The top face of the cubic mass module 10 may be formed as a wide groove 14 between two parallel steps 15. Each step 15 can be longitudinally along an edge 16 of the mass module 10. The step 15 may comprise a reverse bevel 17, wherein the groove 14 has wider bottom compared to the top. This will facilitate movement of the movable platform 20 which will be explained later.

The mass module 10 may comprise an anti-slip surface texture, such as an anti-slip coating or a shell made of anti-slip material. A core of the mass module may comprise sand, gravel, stones, cement, metal, etc. suitable material having a density of equal or more than 1000 kg/m3. The shell may alternately be made of metal, or the whole mass module 10 be made of cast cement or cast iron.

Figure 4 illustrates multiple mass modules 10 stacked on top and next to each other. The grooves 14 form a canal between the two stacked mass modules 10 so that the movable platform 20 can fit therein and move between the stacked mass modules 10.

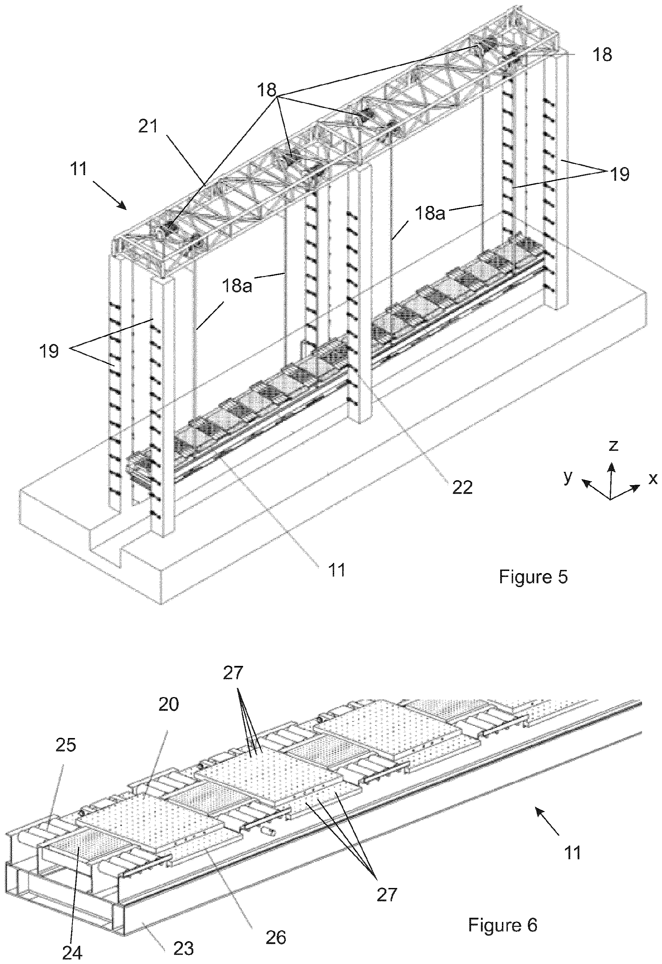

Figure 5 illustrates a storage system with one conveyer system according to an embodiment. The conveyor system 11 is arranged to horizontally move mass modules 10 in x-direction. The storage system may comprise a frame 12 for supporting the conveyer system 11. The frame 12 may comprise vertical pillars 19 and a horizontal girder 21 supported by the pillars 19. The conveyer system 11 may be arranged between the pillars 19 in such a way that at least two pillars 19 are arranged on one longitudinal side of the conveyer system 11, and at least two pillars 19 are arranged on the other longitudinal side of the conveyer system 11. The pillars 19 and the girder 21 may define the area of vertical movement of the conveyer system 11. The number of the pillars 19 is preferably 4, 6, 8, etc. even number.

Each pillar 19 may comprise a plurality of position systems 22 spaced at fixed intervals and corresponding to the height of the stacked mass module 10, and arranged to indicate the correct vertical position of the conveyer system 11. The position system 22 may comprise an electrical hinge lock releasably lockable to the conveyer system 11.

At least one hoist 18 may be attached to the frame 12, the hoist 18 is arranged to vertically move the whole conveyor system 11 in z-direction, z-direction being perpendicular to x-direction and y-direction. The hoist 18 may be attached to the girder 21 in such a way that one end of the hoisting rope 18a is attached to a hoist drum and the other end of the hoisting rope 18a is attached to the conveyer system 11, for example at its side or under. The hoisting rope 18a may be a steel wire rope. The conveyer system 11 may be completely suspended by the hoists 18 and the pillars 19. The number of the hoists 18 is preferably 4, 6, 8, etc. even number. The girder 21 may comprise of several beams forming a grid structure, or alternatively one large beam.

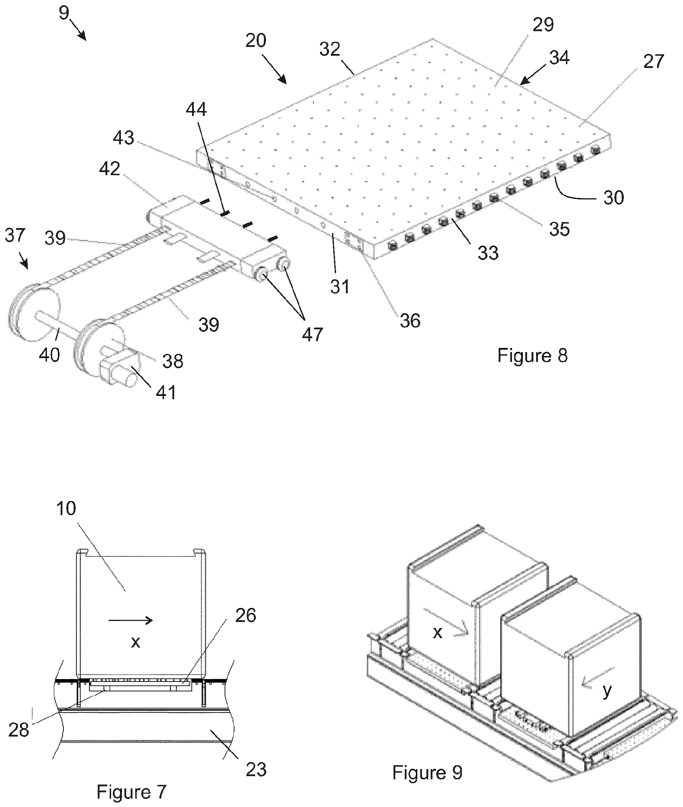

Figure 6 illustrates a closer view of the conveyer system 11 according to an embodiment, and Figure 7 illustrates a partial side view of the conveyer system 11 with a mass module 10. The conveyer system 11 comprises a rack 23, longitudinally arranged at the bottom part of the conveyer system 11. The rack 23 can be made of steel structure of other durable material. The rack 23 is arranged to support rotatable chain wheels with chains (not shown), attached to the rack 23. The chain wheels with chains are arranged to horizontally move the mass modules 10 in x-direction. The chain wheels may be rotated by at least one electrical motor. Each roller 25 may be connected to the chain wheel with the chains. The electrical motor moves the chain and rotate the rollers. Rollers 25 may be arranged between the chain wheels to facilitate movement of the mass modules 10.

The conveyer system 11 further comprises a first set of horizontally restricted platforms 26 arranged on the rack 23. The horizontally restricted platforms 26 are positioned at a distance away from each other in such a way that the rollers 25 are located between the horizontally restricted platforms 26 and facilitate transporting the mass modules 10 to the horizontally restricted platforms 26. The chain wheels may be arranged on each side of the horizontally restricted platforms 26. In some embodiments, the distance between the horizontally restricted platforms 26 may be smaller than length of the mass module 10, and as illustrated in figure 6, for example, a length of 1 to 4 parallel rollers 25.

The horizontally restricted platforms 26 may be shaped in such a way that it is a plate-like platform having a top surface and a bottom surface opposite the top surface. The top surface may be dimensioned in such a way that it is smaller than the bottom face of the mass module 10. The horizontally restricted platform 26 may be manufactured from steel or composite or carbon fibres, for example.

The top surface of the horizontally restricted platform 26 facing up may comprise a plurality of gas holes 27, said gas holes 27 are arranged to deliver pressured gas for facilitating the movement of the mass modules 10 in x-direction. The gas holes 27 can be evenly distributed. A gas inlet may be arranged on one of the sides of the horizontally restricted platform 26 and is connected to the gas compression system and storage 7.

The rollers 25 may be arranged on the whole width of the conveyer system 11, or as illustrated in figure 6, comprise a fixed platform 24 between the rollers 25, wherein the fixed platform 24 may comprise gas holes 27, similar to the ones in the horizontally restricted platforms 26, arranged to deliver pressured gas to decrease friction of the mass modules 10 during its movement in x-direction.

Each platform of the first set of horizontally restricted platforms 26 may further comprise high-pressure air suspension. In practice, it means the second surface of the horizontally restricted platform 26 may comprise corresponding gas holes 27 as are arranged in the top surface. Alternatively, the conveyer system 11 may comprise a hydraulic cylinder 28 for vertically moving the horizontally restricted platforms 26 in relation to the rack 23. The hydraulic cylinder 28 may be located under the horizontally restricted platform 26.

When the horizontally restricted platform 26 is in an upper setup, the top surface may be at a same level as the rollers 25 or slightly lower so that the pressured air from the gas holes 27 lifts the mass module 10 to the same level as the rollers 25. This will facilitate the movement of the mass modules 10 in x-direction by providing less friction between the mass module 10 and the horizontally restricted platform 26.

When the horizontally restricted platform 26 is in a lower setup, this vertical movement may be approximately as small as the thickness of the horizontally restricted platform 26. In the upper setup it facilitates the movement of the mass modules 10 in x-direction. In the lower setup it facilitates the movement of the mass modules 10 in y-direction by providing additional space between the mass module 10 and the horizontally restricted platform 26, allowing the movable platform 20 of the movable platform system 9 to move in-between and transport the mass module 10 to a storage area located beside the conveyer system 11.

The conveyer system 11 further comprises a second set of the movable platform system 9 for horizontally transporting mass modules 10 in y-direction. The numbers of the first set and the second set may be the same. The movable platform system 9 is explained in more detail below.

Figure 8 illustrates a movable platform system 9 according to an embodiment. The movable platform system 9 comprises the movable platform 20 having a top surface 29 and a bottom surface 30 opposite the top surface 29, the top surface 29 and the bottom surface 30 may be parallel to each other. The movable platform 20 may be cuboid shaped with additional four side faces 31, 32, 33, 34, and in some embodiments, the movable platform 20 may have a same top or bottom surface shape as the horizontally restricted platform 26. However, in some embodiments, they can be different shape. The top surface 29 may be dimensioned in such a way that it is smaller than the bottom face of the mass module 10, and especially so that the movable platform 20 fits within the groove 14 of the mass module 10 and between the steps 15. The movable platform 20 may have a same design and same size as the horizontally restricted platform 26 and made of same material.

The movable platform 20 may further comprise protrusions 35 on a second side face 32 or a third side face 33 or both, perpendicular to the first side face 31. The protrusions 35 may be arranged to facilitate positioning the movable platform 20 to a correct position in relation to the mass module 10. The number of the protrusions 35 may vary from 1 to 20, especially from 5 to 15. Each protrusion 35 may comprise a rotatable roller, wherein the roller has a vertical rotational axis.

The movable platform 20 comprises a plurality of gas holes 27 on the top surface 29 or the bottom surface 30 or both surfaces. The gas holes 27 are arranged to deliver pressured gas from the gas compression system and storage 7 for lifting the mass module 10 or the movable platform 20 or both. The top surface 29 or the bottom surface 30 or both may comprise a grid lattice of 12 x 14 gas holes 27, for example. However, other lattice designs may be used. By lifting the mass module 10 or the movable platform 20 using pressured air, friction between the sliding surfaces can be remarkably reduced, which results in faster operations in transporting the mass module 10 and less energy consumption.

The movable platform 20 may further comprise a gas inlet 36 arranged to form a gas passage between the gas inlet 36 and the plurality of gas holes 27. The gas inlet may be arranged on one of the side faces, such as the first side face 31 of the movable platform 20 and is connected to the gas compression system and storage 7.

The movable platform system 9 further comprises a reeler 37 with at least one reel 38 with a windable and rewindable cord 39. Two or more reels 38 may be used to give additional support. The reels 38 may be coupled to a shaft 40 at their centers, wherein the shaft 40 is rotatable by a reeler motor 41. The windable and rewindable cord 39 is wound around each reel 38. The cord 39 should be rigid in such a way that it can be wound around the reel 38 but stay straight when unwound. The cord 39 can be made of, for example, carbon-fiber traction band or chain links or chain belt so that the cord 39 does not buckle or twist under the force of moving the movable platform 20.

Whereas one end of the cord 39 is attached to the reel 38, the other end of the cord 39 is attached to a connector 42. The connector 42 may be releasably attachable to a first side face 31 of the movable platform 20 and arranged to move the movable platform 20 via the reeler 37. The connector 42 may be a magnetic connector having an electrical connection that relies on a magnetic force to both make and maintain the connection.

The movable platform 20 may further comprise sockets 43 configured to receive corresponding plugs 44 of the connector 42, said sockets 43 and plugs 44 are counterparts arranged to enable a self-aligning connection. Both the plug 44 and the socket 43 have corresponding magnets or magnetic faces that enable the self-aligning connection to be made allowing the connector to attach to the movable platform 20.

The connector 42 may further comprise at least one wheel 47 on opposite sides of the connector 42. In figure 8, two wheels 47 are arranged on each side, arranged to facilitate motion of the connector 47 by reducing the friction. The connector 42 may have a width and thickness equal or smaller than the width and thickness of the movable connector 20 to allow the connector 42 to move with the groove 14.

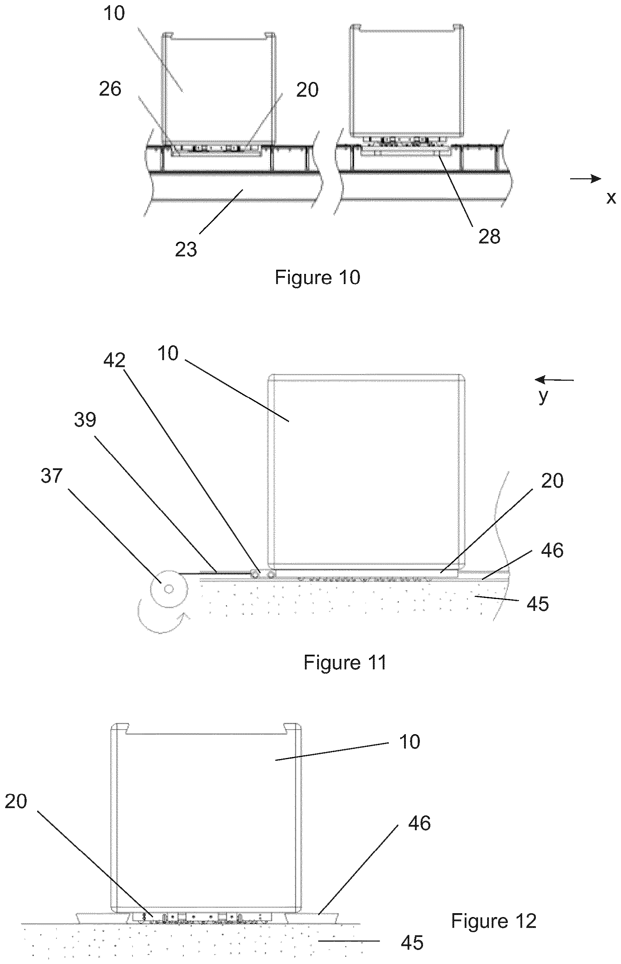

Figure 9 illustrates another closer view of the conveyer system 11 with mass modules 10 and figure 10 illustrates another partial side view of the conveyer system 11 with mass modules 10, when the mass modules 10 are moved from the cable system 3 to the storage area of the storage system. The mass modules 10 are first horizontally moved along the conveyer system 11 in x-direction. During this movement, the horizontally restricted platform 26 are in the upper setup and delivering pressured air from the gas holes 27 of the top surface, allowing smooth and energy efficient transportation of the mass modules above the conveyer system 11. The horizontally restricted platforms 26 may be in the upper setup only if there are no movable platforms 20 on top of the platform 26.

The mass modules 10 are then stopped above the horizontally restricted platform 26, wherein the horizontally restricted platform 26 is moved to the lower setup so that rigid structures of the rack 23 are supporting the mass modules 10. This allows the movable platform 20 of the movable platform system 9 to move between the mass module 10 and the horizontally restricted platform 26 so that the movable platform 20 is completely under the mass module 10. The pressured air is delivered from the bottom surface 30 of the movable platform 20 which lifts the mass module 10. The horizontally restricted platform 26 may also be lifted by the hydraulic cylinders 28 to further facilitate transportation of the mass module 10 in y-direction.

Alternatively, the horizontally restricted platform 26 may be first at the lower setup and the movable platform 20 can be moved on top of the horizontally restricted platform 26. The mass modules 10 are then delivered from the cable system 3 and moved on top of the waiting movable platforms 20, which transport the mass modules 10 to the storage area.

In both solutions, the pressured air is delivered from the gas holes 27 of the movable platform 20 or the horizontally restricted platform 26 or both to facilitate friction-free movement.

Figure 11 illustrates a side view of the movable platform system 9 with the mass module 10. Figure 12 illustrates a perpendicular side view of figure 11. The movable platform 20 moves the mass module 10 in the storage area in y-direction, which is perpendicular to x-direction. The storage area may comprise a storage rack 45, which may be made of steel structure or other durable material. The storage rack 45 may have top rails 46 and a groove between the rails 46 so that the movable platform 20 is levitated above the top rails 46 during the transportation of the mass modules 10. The groove may have a similar width, depth and/or shape as the groove 14 of the mass module 10. When the mass module 10 is at its designated storage location, output of the pressured air is decreased, in which case the mass module 10 lands on the top rails 46 or on the already stacked mass module 10. The term "top rail" in this context may refer to any metal strip arranged between the mass module 10 and the storage rack 45 so that the movable platform 20 may move between the top rails 46. The top rail 46 may extend all the way from the conveyer system 11 to the reeler 37.

An example of the stacked mass modules 10 in the storage configuration is illustrated in figure 4. A movable platform system 9 is arranged on each row so the movable platform 20 fits and is movable inside the groove 14 between the two stacked mass modules 10. The movable platform system 9 is arranged to move in z-direction along with the conveyer system 11 so that when the conveyer system 11 is lifted by the hoists 18, the movable platform system 9 is moved with it.

The storage system may comprise two or more conveyer systems 11, and the reelers 37 of the movable platform systems 9 of a first conveyer system 11 may be arranged underneath a neighbouring rack 23 or attached beside the neighbouring rack 23 of a second conveyer system 11.

For maximizing the efficiency of the gravity energy storage system, it is preferred to have multiple conveyer systems 11, for example 8, as illustrated in figure 1. Each conveyer system 11 may have more than 10, for example 12 as illustrated in figure 5, horizontally restricted platforms 26, which provides same number of rows for the mass module storage area. Each row may comprise more than 10, for example 15 as illustrated in figure 2, mass modules 10 side by side. Each row may have more than 5, for example 6 as illustrated in figure 2, mass modules on top of each other. Based on this calculation, each conveyer system 11 can handle more than 10x10x5=500 mass modules 10. All the movable platform systems 9 of the same conveyer system 11 may move the mass modules 10 at the same time, or the system can be configured to move every odd movable platform system 9 first and every even movable platform system 9 second.

In the above, it is explained how the mass modules 10 are moved from the conveyer system 11 to the storage rack 45 which may be operated in the upper storage site 1 when the electricity is cheap or renewable energy is abundant, or in the lower storage site 2 when the electricity is expensive and gravity energy of the mass modules 10 is released. In the lower storage site 2 the mass modules 10 are then stored in the storage rack 45 and waiting for the appropriate time to be moved to the upper storage site 1 again. Moving the mass modules 10 from the storage rack 45 to the conveyer system 11 takes place in reverse. The movable platform 20 of the movable platform system 9 lifts the first available mass module 10 closest to the conveyer system 11 using the pressured air, and the movable platform 20 is then moved on top of the horizontally restricted platform 26 of the conveyer system 11 and lowers the mass module 10 on the conveyer system 11. The reeler 37 reels the movable platform 20 back towards the storage rack 45 and the horizontally restricted platform 26 moves upwards and releases pressured air from the top surface while the rollers 25 move the mass module 10 towards the cable system 3.

The present gravity energy storage technology is based on moving solid mass modules from a lower elevation to a higher elevation when electricity is cheaper, and moving the mass modules from the higher elevation to the lower elevation when electricity is more expensive. Energy is stored when the mass is lifted to an upper storage site, and energy is produced when the mass is lowered to a lower storage site.

The present conveyer system can increase the transportation speed and reduce energy consumption, as well as exhibit high energy storage efficiency and a large storage capacity. The design of the present gravity energy storage system requires less space, shorter construction period, long service life and is environmentally friendly. It can effectively utilize existing resources, such as abandoned mines, to serve solar and wind energy applications and as well as power productions.

The present invention enables efficient storage and release of gravitational energy with minimal energy loss. It can respond quickly to electricity demands, achieve rapid charging and discharging, and possess flexible energy scheduling capabilities. It will provide the energy industry with a reliable and economically efficient energy storage solution, promote sustainable development of renewable energy, and ensure the stability of power systems.

It will be obvious to a person skilled in the art that, as the technology advances, the inventive concept can be implemented in various ways. The invention and its embodiments are not limited to the examples described above but may vary within the scope of the claims.
1 upper storage site
2 lower storage site
3 cable system
4 control unit
5 power transmission system
6 power grid
7 gas compression system and storage
8 renewable energy harvester
9 movable platform system
10 mass module
11 conveyer system
12 frame
13 beam
14 groove
15 step
16 edge
17 reverse bevel
18 hoist
18a hoisting rope
19 pillar
20 movable platform
21 girder
22 position system
23 rack
24 fixed platform
25 rollers
26 horizontally restricted platforms
27 gas holes
28 hydraulic cylinder
29 top surface
30 bottom surface
31 first side face
32 second side face
33 third side face
34 fourth side face
35 protrusion
36 gas inlet
37 reeler
38 reel
39 cord
40 shaft
41 reeler motor
42 connector
43 socket
44 plug
45 storage rack
46 top rail
47 wheel

## Claims

1. A movable platform system for transporting mass modules, said system comprises:
a movable platform having a top surface and a bottom surface opposite the top surface,
a reeler with a windable and rewindable cord,
a connector attached to an end of the cord,
the connector is releasably attachable to the movable platform and arranged to move the movable platform via the reeler,
the bottom surface of the movable platform comprises a plurality of gas holes, said gas holes arranged to deliver pressured gas for lifting the movable platform.

2. The movable platform system according to claim 1, wherein the connector is a magnetic connector.

3. The movable platform system according to claim 1 or 2, wherein the reeler comprises at least two reels coupled to a shaft at their centers, the shaft is rotatable by a reeler motor, the windable and rewindable cord is wound around each reel.

4. The movable platform system according to any one of the claims 1-3, wherein the movable platform is cuboid shaped with four side faces,
the connector is releasably attachable to a first side face,
protrusions are located on a second side face or a third side face or both, perpendicular to the first side face, the protrusions arranged to facilitate positioning the movable platform to a correct position in relation to the mass module.

5. The movable platform system according to claim 4, wherein the protrusions comprise rotatable rollers.

6. The movable platform system according to any one of the claims 1-5, wherein the movable platform further comprises a gas inlet arranged to form a gas passage between the gas inlet and the plurality of gas holes.

7. The movable platform system according to any one of the claims 1-6, wherein the movable platform further comprises sockets configured to receive corresponding plugs of the connector, said sockets and plugs are counterparts arranged to enable a self-aligning connection.

8. A storage system for mass modules, said system comprises:
at least one conveyor system arranged to horizontally move mass modules in x-direction, the conveyor system comprising
a rack,
a first set of horizontally restricted platforms on the rack, said platforms are positioned at a distance away from each other,
chain wheels with chains attached to the rack, and configured to move the mass modules,
rollers arranged between the chain wheels,
a second set of movable platform systems according to any one of the claims 1-7, wherein the movable platform is arranged above the horizontally restricted platforms, for horizontally moving the mass modules in y-direction, y-direction being perpendicular to x-direction.

9. The storage system according to claim 8, wherein each platform of the first set of horizontally restricted platforms comprises high-pressure air suspension, and plurality of gas holes on a top surface, said gas holes arranged to deliver pressured gas for facilitating the movement of the mass module in x-direction.

10. The storage system according to claim 8 or 9, wherein each horizontally restricted platform is vertically moved by a hydraulic cylinder in relation to the rack.

11. The storage system according to any one of claims 8-10, wherein said system further comprises a frame for supporting the conveyer system,
a hoist attached to the frame, the hoist is arranged to vertically move the conveyor system in z-direction, z-direction being perpendicular to x-direction and y-direction.

12. The storage system according to claim 11, wherein the frame comprises vertical pillars and a horizontal girder supported by the pillars, the hoist is attached to the girder.

13. The storage system according to claim 11 or 12, wherein the number of the hoists is four or more.

14. The storage system according to any one of claims 8-13, wherein the storage system comprises two or more conveyer systems, and the reeler of the movable platform system of a first conveyer system is arranged underneath a neighbouring rack or attached beside the neighbouring rack of a second conveyer system.

15. A gravity energy storage system, said system comprising
a storage system according to any one of the claims 8-14 at a lower elevation,
a cable system for transporting mass modules from lower elevation to higher elevation and vice versa,
a storage system according to any one of the claims 8-14 at a higher elevation,
a control unit for controlling operations of the system,
a power transmission system connected to a power grid,
a gas compression system and storage for pneumatic operations.
